(19) **Europäisches Patentamt**
**European Patent Office**
**Office européen des brevets**

(11) **EP 2 107 403 A1**

(12) **EUROPEAN PATENT APPLICATION**

(43) Date of publication:
**07.10.2009 Bulletin 2009/41**

(51) Int Cl.:
*G02B 6/14* *(2006.01)* *G02B 6/02* *(2006.01)*

(21) Application number: **09004916.4**

(22) Date of filing: **02.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **02.04.2008 US 80400**

(71) Applicant: **OFS Fitel, LLC**
**Norcross GA 30071 (US)**

(72) Inventor: **Sumetsky, Mikhail**
**Bridgewater, NJ 08807 (US)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(54) **Asymmetrically perturbed optical fibers for mode transformers**

(57) Utilization efficiency of cladding pump light in a cladding pumped optical device is improved by converting higher order modes travelling in the cladding to lower order modes that enter the core region and participate more effectively in the energy exchange process. The mode conversion is achieved by asymmetric perturbations in the optical fiber. The perturbations are preferably produced by making the optical fiber in the gain section of the device cylindrically asymmetric. The asymmetric perturbations can be chosen so that they have negligible effect on the lower mode signal light in the core of the optical fiber.

FIG 1

**Description**

**Field of the Invention**

The invention relates to optical fiber mode controlling devices.

**Background of the Invention**

In cladding pumped optical fiber devices, primarily lasers and amplifiers, the pump light is introduced into the cladding of the optical fiber device. The objective is for the pump light, at some point, to enter the core of the optical fiber and there interact to produce energy exchange for light amplification. A portion of the pump light achieves this effectively, but another portion does not. It remains in higher order modes propagating in the cladding through the active section of the device.

A class of amplifier devices widely used in optical fiber systems is erbium-doped fiber amplifiers (EDFAs). Improving pump efficiency in cladding pumped devices in general, and EDFA devices in particular, is one objective of the invention. This is achieved primarily by using a mode conversion technique to enhance the pump energy in the core of the fiber.

Mode conversion in optical fibers is we<ll known. Changing the physical shape of the optical fiber to enhance mode mixing has been demonstrated. See for example, United States Patent No. 5,864,644, issued January 29, 1999. That patent describes various optical fiber cross sections that produce mode mixing. The result of using the optical fiber configurations shown in that patent is that the modes are uniform across the cross section of the fiber.

Another approach to mode conversion by deforming the fiber is described in U.S. Patent No. 3,666,348. This patent suggests using long period gratings (i.e., perturbations of a fiber that are periodic along the fiber length) for mode coupling and conversion. U.S. Patents Nos. 3,909,110 and 4,176,911 suggest using asymmetric variation of the core refractive index (but not of the fiber cladding or shape) for mode conversion. U.S. Patents Nos. 3,966,446, 4,038,062, and 6,990,277 suggest axially symmetric local deformation. Deformations used to enhance coupling between modes with larger angular momentum and modes with lower angular momentum are suggested in U.S. patents Nos. 7,043,128 and 6,735,985, where the deformations are introduced by fiber twisting.

**Summary of the Invention**

I have designed a cladding pumped optical device and related method wherein the utilization efficiency of the cladding pump light is improved. This is achieved by converting higher order modes travelling in the cladding to modes that enter the core region to participate more effectively in the energy exchange process. The mode conversion is achieved using asymmetric perturbations in the optical fiber. Asymmetric perturbations are perturbations that disturb the local rotational and/or translation symmetry of the fiber. The fiber initially may have a round, elliptical, or another cross-section shape. The perturbations are preferably produced by physical deformations selectively provided along one side of the optical fiber. The perturbations can be chosen so that the amplitude of transition of the signal mode to the neighbouring higher order modes is negligible The perturbations are effective for converting high mode pump light to other propagating modes but have negligible effect on the lower mode signal light in the core of the optical fiber. The invention is useful for cladding pumped devices.

**Brief Description of the Drawing**

Fig. 1 shows examples of optical fiber cross sections used to form an asymmetric optical fiber according to one embodiment of the invention;

Fig. 2a shows the asymmetric optical fiber in cross section, and in plan views of the x-z and y-z planes, with the z-axis the major axis of the optical fiber;

Fig. 2b shows schematically the optical power distribution in the optical fiber shown in Fig. 2a;

Fig. 2c is a comparison figure showing the optical power distribution in an optical fiber a deformation that is the same along both the x- and y-axes, i.e. an optical fiber that is symmetric,

Fig. 3 is a schematic view of an alternative embodiment of the invention;

Figs. 4a, 4b, and 4c are views showing parameters useful for defining asymmetric optical fibers;

Fig. 5. is an example of fiber deformation proportional to the fiber core deformation; and

Fig. 6 is a perspective view of a cladding pumped device.

## Detailed Description

For improved pumping, according to the invention, at least some portion of the higher order input modes of the pump light, which have relatively low intensity at the core, are transformed into other modes that have greater intensity at the core. In an optical fiber having a uniform diameter and cylindrical symmetry the modes in the pump light do not couple to each other. Even if there are perturbations in the modefield caused by physical deformations in the surface of the optical fiber, if the perturbations (or the deformities) are symmetrical the angular momentum of the modes is uniformly conserved, and effective mode coupling does not occur. However, if the perturbations are not cylindrically symmetric mode coupling does occur and optical energy is transferred to the core of the optical fiber. Asymmetric perturbations are created by asymmetric deformities along the cylindrical axis of the optical fiber.

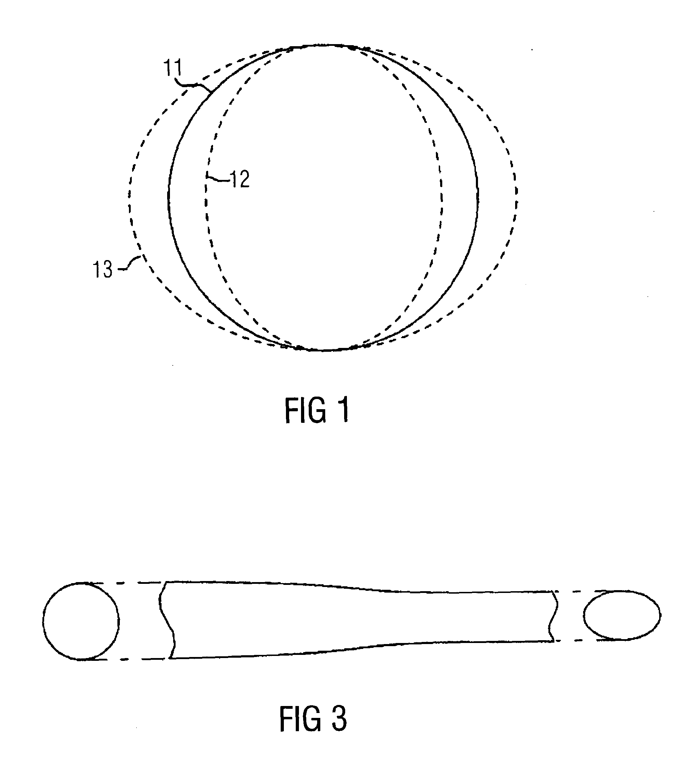

One embodiment of asymmetric physical deformations is shown in Fig. 1. Fig. 1 shows three optical fiber cross sections taken at different planes along the length (z-axis) of the optical fiber. The cross sections are in the x-y plane. The z-axis (the axis extending into the plane of the figure) is the longitudinal axis of the optical fiber. The axis extending in the vertical direction of the page is the y-axis, while the axis extending horizontally is the x-axis. For this simplified illustrative numerical simulation, the optical fiber diameter D is chosen to be 20 microns and the index distribution along the cross-section of the fiber is chosen to be uniform

The cross sections vary from the normal optical fiber cross section 11, where the diameter of the optical fiber is D and is uniform, to the case shown by 12, where the cross section is elliptical with the major axis of the ellipse in the y-direction, and to the case shown by 13 where the cross section is elliptical with the major axis of the ellipse in the x-direction. In the cross section 12, the diameter of the optical fiber along the major axis of the ellipse is the nominal diameter D. In the cross section 13, the diameter of the optical fiber along the minor axis of the ellipse is the nominal diameter D. In this embodiment the deformation in D varies from -x to 0 to +x, which represents a preferred embodiment. A recommended range for the magnitude of x is 0.01 D to 0.5D, or 0.1D to 0.5D.

With reference to Fig. 1, and following the recommendation just given, the length of the major axis of the ellipse in the cross section 13 would be 1.01 D to 1.5D, and the length of the minor axis of the ellipse in the cross section 12 would be 0.5D to 0.99D, or 0.5D to 0.95D.

The axial (z-direction) distance over which the deformations occur may vary widely, as much as 100D, or even over the entire length of the gain section.

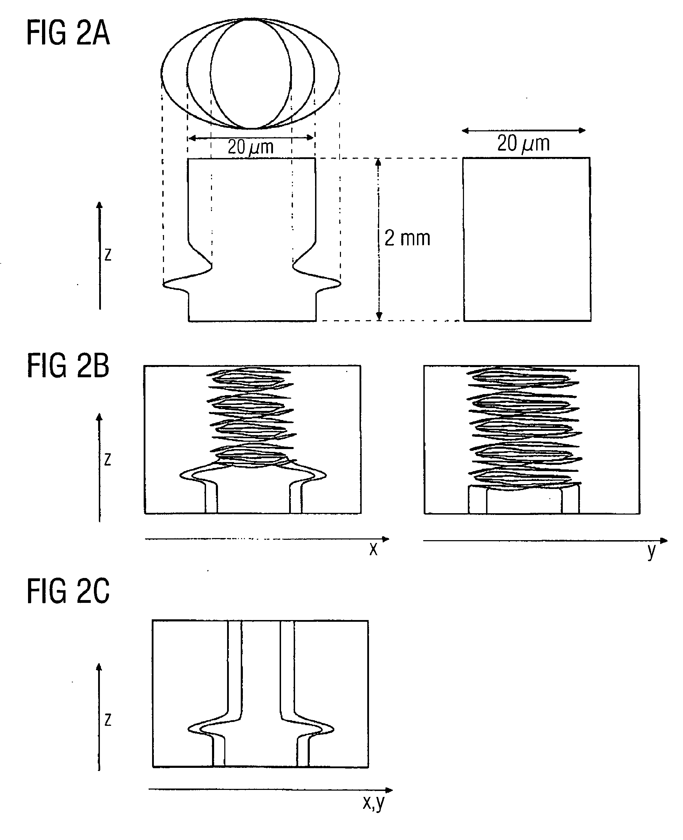

The cross sections in Fig. 1 correspond to those shown at the top of Fig. 2(a). The plan view of the optical fiber cylinder taken along the x-axis (the x-z plane) is shown on the left side of Fig. 2(a) below the cross section. The orthogonal plan view, along the y-axis (the y-z plane), is shown on the right of Fig. 2(a). In the optical fiber cylinder along the y-axis, the diameter of the optical fiber in any x-y plane along the z-direction, is uniform. That is the normal case represented by 11 in Fig. 1. The asymmetric deformations appear in the x-axis of the x-y plane in Figs. 1 and 2(a). A deformation is defined as a significant variation in the nominal diameter of the optical fiber that occurs in the x (or y) direction but not in the orthogonal direction. In the 3 cross section views of Figs. 1 and 2(a), the diameter varies in the x-direction from D, corresponding to 11 in Fig. 1, to D plus approximately 3.3 microns, corresponding to 13 in Fig. 1, to D minus approximately 3.3, corresponding to 12 in Fig. 1. Expressed more generally, the deformations are +/- 0.167D. The overall deformation, which in this illustration is a highly distorted sine wave, occurs over a distance of approximately .67 mm in the z-direction. The figures shown are not to scale. Although this model was used to generate the results described below, similar or equivalent results can be expected for a wide choice of asymmetric deformations.

Figs. 2(b), and 2(c) describe the effect of asymmetric physical deformities used according to the invention to produce mode conversion of a high order mode, or group of high order modes, of pump light propagating in the cladding. In this demonstration the mode is $LP_{61}$. It should be understood that a variety of modes, and combinations of modes, may be processed according to the description below. In general, a high order mode is $LP_{m,n}$ where either m or n, or both, is 3 or more. Figs. 2(b) and 2(c) show schematically the optical power distribution inside the optical fiber. The diagram on the left of Fig. 2(b) represents the power distribution as seen along the x-axis, while the diagram on the right is the orthogonal view, i.e. along the y-axis showing the power distribution along that axis. The direction of light propagation is indicated by the arrow, i.e. from the bottom of each figure to the top. As is evident, in the absence of asymmetric deformations, $LP_{61}$ light propagates in an envelope around the outer periphery of the optical fiber, i.e. essentially in the cladding of the fiber. It is understood that in a cladding pumped device, the pump light is introduced into the cladding of the optical fiber. Light in lower order modes propagates to the doped core of the optical fiber where it encounters rare earth ions, typically erbium ions, and pumps the erbium ions to an excited state. However, light in high order modes remains in the cladding and is relatively useless for pumping the device. However, when the light encounters a significant asymmetric deformation in the surface of the optical fiber the high order mode(s) undergo(es) mode transformation and the optical energy in the high order mode redistributes through the fiber as shown in Fig. 2(b).

In a control comparison, an analysis was made for the power distribution in an optical fiber with a physical deformation like that shown in Fig. 2(a), except that the deformation was symmetrical in the x-y planes. The result of that analysis is shown in the power distribution profile in Fig. 2(c). It is seen that the optical power in the high order mode remains in that mode after traversing the perturbation.

In the embodiment just described the deformation in D varies from -x to 0 to +x, which represents a preferred embodiment. However, generally effective diameter variations may be only D+x, or only D-x. Following this teaching, an optical fiber that is tapered along one side of the fiber but not the other would be effective. That embodiment is illustrated in Fig. 3.

While a single plus/minus deformation is shown in Fig. 1, it should be understood that any number of deformations may be used, and they may occur periodically or randomly along the z-axis of the fiber. Multiple asymmetric deformations may be the same size and shape, or be vastly different in size and shape.

The size and shape of the fiber shown in Figs. 1 and 2(a) may be expressed in the following parametric form:

$$x\,(\theta, z) = 20 + 10\,f\,(z)\,\cos\,(\theta)$$

$$y\,(\theta, z) = 20 + 10\,\sin\,(\theta)$$

$$f\,(z) = \{1\text{-}0.8\,\exp\,[0.0001\,(\,z - 400)^2\,]\}\,(1\text{-}0.8\exp\{0.0004\,(z - 600^2\,]\}$$

In the embodiments described above the optical fiber is nominally round. That represents the preferred embodiment. However, similar effects on mode transformation may be obtained when the optical fiber is nominally elliptically shaped, star shaped, or has another cross-section geometry possessing translation symmetry. The example shows that deformations that disturb the translation symmetry and the rotation symmetry of the fiber can effectively transform modes with negligible fraction of power in the center of the fiber into modes with significant fraction of power in the center of the fiber.

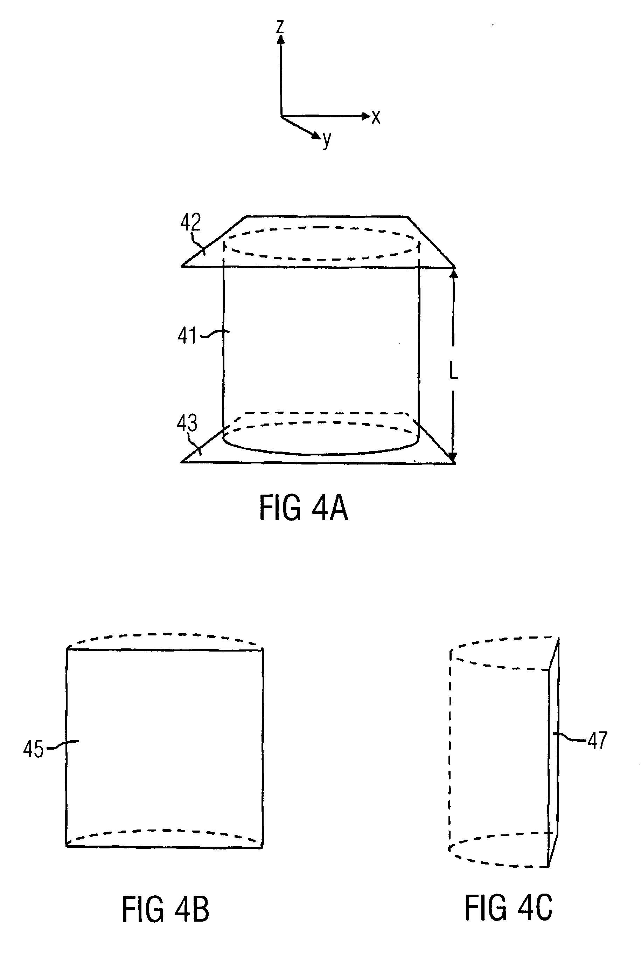

For the purpose of defining aspects of the above it may be useful to compare cylindrical sections of a given optical fiber where the major axis of the optical fiber extends longitudinally in the z-direction. These parameters are illustrated in Fig. 4. A cylindrical section is an imaginary section comprising a portion 41 of the optical fiber bounded by two imaginary x-y planes, 42 and 43, with the x-y planes separated by distance L. L is an arbitrary distance sufficient to identify the shapes described below.

Fig. 4b illustrates the x-z plane 45 of the section, and Fig. 4c illustrates the y-z plane of the section. Both planes are major planes, i.e. they intersect the center axis of the optical fiber.

An alternative approach to determine whether the optical fiber is asymmetric two different optical fiber sections, a first section and a second section, can be compared. The sections may be taken at any place along the optical fiber length, i.e. at any two places along the z-axis. An optical fiber is translationally symmetric when the x-z plane of the first section is congruent with the x-z plane of the second section, and the y-z plane of the first section is congruent with the y-z plane of the second section. An optical fiber is defined as translationally asymmetric when the y-z plane of the first section is congruent with the y-z plane of the second section, but the x-z plane of the first section is significantly incongruent with the x-z plane of the second section. There may be fine non-uniformities in congruence in a cylindrically symmetric optical fiber, but those skilled in the art will easily identify when those non-uniformities are deliberate and designed to render the optical fiber cylindrically asymmetric for the purpose of the invention. One potential indication of the latter is when a linear dimension in the x-y plane of one section differs from the corresponding linear dimension of the y-z plane in another section by more than 1%, or by more than 5%.

In fiber laser pumps, perturbations should effectively transmit light from the higher order modes into the lower order modes, which overlap with the core and the signal mode. However, these perturbations should not affect the signal mode. The latter can be achieved if the perturbations are chosen so that the amplitude of transition of the signal mode to the neighbouring higher order modes is negligible. As an example, assume that the deformation of the fiber affects the signal mode primarily through the variation of the fiber core radius,

$$r = r_0 + \Delta r(z), \qquad\qquad\qquad (1)$$

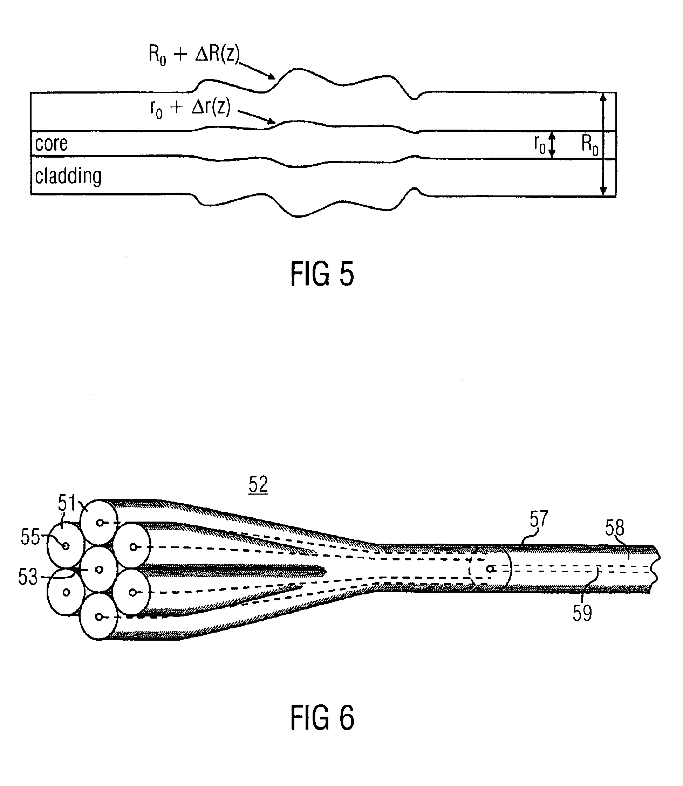

which is proportional to the variation of the fiber radius $R = R_0 + \Delta R(z)$ as illustrated in Fig. 5. It is assumed that the perturbation $\Delta r(z)$ is localized at the segment $L$ along the fiber axis $z$ so that $\Delta r(z) = 0$ outside this segment. Introduce the propagation constant of the signal mode, $\beta_0$. Under the effect of this perturbation, the fundamental mode can be attenuated due to transitions to the closest higher order modes. Introduce also the propagation constants of these modes, $\beta_1, \beta_2, ..., \beta_M$. According to the perturbation theory, in order to exclude transitions from the signal mode to these higher order modes, the radius variation $\Delta r(z)$ should satisfy the conditions:

$$\int_L \Delta r(z) \exp[i(\beta_0 - \beta_m)z]dz = 0, \quad m = 1, 2, ..., M . \qquad (2)$$

In other words, function $\Delta r(z)$ should be orthogonal to functions $\exp[i(\beta_0 - \beta_m)z]$ at the segment $L$. In order to determine what are the possible shapes $\Delta r(z)$ that satisfy Eqs. (2), the set of functions $\exp[i(\beta_0 - \beta_m)z]$, $m=1,2,...,M$, is orthogonalized at the interval $L$ (this is a well known mathematical procedure called the Gram-Schmidt orthogonalization, see e.g. S. Roman, "Advanced Linear Algebra", Springer, 2005). Then, the functions $\mu_k(z)$, which are orthogonal to this set of orthogonal functions, are constructed (this can be done with the same mathematical method as well, see the same book). Finally, any linear combination of functions $\mu_k(z)$,

$$\Delta r(z) = \sum_k C_k \mu_k(z) \qquad (3)$$

will satisfy Eq.(2) and, therefore will not cause noticeable attenuation of the signal mode. Importantly, Eqs.(2) do not forbid transitions of the pump radiation from the higher order modes to the lower and fundamental modes because the wavelength of the pump light and the signal light is different.

The asymmetry represented by Fig. 2, for example, is shown as a physical deformity in the glass shape of the optical fiber. The mode conversion effects described here may result from perturbations that affect only the refractive index of the optical fiber rather than perturbations in the physical shape of the optical fiber. Typical optical fibers have graded or step index variations across the radius of the optical fiber, but these variations are essentially uniform along the length of the optical fiber. Following the teachings of the invention these variations may vary significantly along the length of the optical fiber, thereby producing translational asymmetry. Or the variations may be rotational asymmetry in refractive index in lieu of, or in addition to, rotational geometric asymmetry. For the purpose of definition, the terms rotational asymmetry and translational asymmetry, as applied to optical fibers, refers to geometric rotational or translational asymmetry, to rotational or translational asymmetry in the refractive index profile, or to both.

As mentioned above, the invention is advantageously applied to optical devices that use cladding pumping. These devices may be optical fiber lasers and amplifiers with rare earth doped gain sections. These devices are widely used in lightwave communications systems. In cladding pumped devices the pump energy is introduced into the cladding. The pump energy may propagate in the same direction or in the opposite direction as the signal. In an especially effective embodiment, multiple pump fibers are bundled around the fiber carrying the signal mode or the fundamental laser mode and connected to the cladding of the signal fiber. Reference herein to "main fiber" is intended to mean the fiber carrying the signal in the case of an optical fiber amplifier, and/or the lasing mode in a laser fiber. Multimode pump light is introduced into the multiple pump fibers and coupled to the cladding of the main fiber. Alternatively, pump and signal fibers can be contained within a common cladding along their length, allowing "side-pumping". Other multiplexing methods may be employed, but in each, the "main fiber" carries the signal or the lasing mode. A gain section is provided to allow the pump energy coupled into the cladding of the main fiber to amplify or provide energy to the propagating mode in the core of the main fiber. Cladding pumped optical fiber structures useful for lasers and amplifiers are described in more detail in U.S. Patents Nos. 5,418,880, 5,937,134, and 5,966,491, all incorporated herein by reference.

A useful technique for bundling and attaching multiple pump fibers to a main fiber is described and claimed in U.S. Patent No. 5,864,644, also incorporated by reference herein. That technique involves arranging the pump fibers around the main fiber and fusing them together. Typically the fused bundle is drawn so the diameter of the fused bundle is approximately equal to the diameter of the main fiber. The pump combiner section, as just described, is coupled to a gain section.

With reference to Fig. 6, a pump combiner section is shown at 52. A plurality of multimode optical pump fibers 51, shown here as six, are bundled in a circular configuration as shown. The optical fiber carrying the signal to be amplified, or the optical fiber coupled to the active laser cavity in the case of a laser device, is shown at 53. The bundle is fused together, and drawn to produce a combined section.

The pump combiner section is coupled to a gain section, shown at 57, so that the pump energy enters the cladding of the gain section of the optical fiber. This is indicated by the dashed lines connecting the cores of the pump fibers to the cladding 58 of the gain section. The signal is transmitted through the core 59 of the gain section.

Various additional modifications of this invention will occur to those skilled in the art. All deviations from the specific teachings of this specification that basically rely on the principles and their equivalents through which the art has been advanced are properly considered within the scope of the invention as described and claimed.

**Claims**

1. Article comprising an optical fiber with translational asymmetry.

2. The article of claim 1 with rotational asymmetry.

3. An optical device comprising:

    an optical fiber gain section comprising a translationally and rotationally asymmetric optical fiber, the optical fiber gain section comprising a core and a cladding, and
    pump means for optically pumping the gain section by introducing light into the cladding of the gain section.

4. Method for providing gain in an optical fiber gain device having an optical fiber gain section wherein the optical fiber gain section comprises a translationally and rotationally asymmetric optical fiber having a rare earth doped core and a cladding comprising the step of:

    introducing pump light into the cladding of the translationally and rotationally asymmetric optical fiber.

5. The optical device of claim 3 or the method of claim 4 wherein the pump light comprises one or more $LP_{m,n}$ modes where m or n, or both, are at least 3.

6. The optical device of claim 3 or the method of claim 4 wherein the optical fiber gain section is the gain section of an optical fiber laser.

7. The optical device of claim 3 or the method of claim 4 wherein the optical fiber gain section is the gain section of an optical fiber amplifier.

8. The optical device of claim 3 or the method of claim 4 wherein the optical fiber gain section is the gain section of an EDFA.

9. The optical device of claim 3 or the method of claim 4 wherein the asymmetric fiber has a length corresponding to a z-axis, and has 3 cross sections corresponding to x-y planes taken sequentially along the z-axis, wherein cross section 1 is essentially a circle with diameter D, cross section 2 is an ellipse with a major axis of length D, and cross section 3 is an ellipse with a minor axis of length D.

10. The optical device of claim 7 or the method of claim 4 wherein the minor axis of cross section 2 has a length in the range 0.5D - 0.95D and the major axis of cross section 3 has a length in the range 1.05D - 1.5D.

11. The optical device of claim 3 or the method of claim 4 wherein the optical fiber extends longitudinally in a z-direction and has two imaginary sections, a first section and a second section, the sections taken at two places along the optical fiber length, with each section bounded by two imaginary x-y planes, so that each section has an imaginary x-z plane and an imaginary y-z plane, wherein the y-z plane of the first section is congruent with the y-z plane of the second section and the x-z plane of the first section is significantly incongruent with the x-z plane of the second section.

12. The optical device of claim 9 or the method of claim 9 wherein a linear dimension in the x-y plane of the first section differs from the corresponding linear dimension in the y-z plane in the second section by more than 5%.

**13.** The optical device of claim 3 wherein the translationally and rotationally asymmetric fiber has a length corresponding to a z-axis, and has 3 cross sections corresponding to x-y planes taken sequentially along the z-axis, wherein cross section 1 is essentially a circle with diameter D, cross section 2 is an ellipse with a major axis of length D, and cross section 3 is an ellipse with a minor axis of length D.

**14.** The optical device of claim 11 wherein the minor axis of cross section 2 has a length in the range 0.5D - 0.99D and the major axis of cross section 3 has a length in the range 1.01D - 1.5D.

FIG 1

FIG 3

FIG 2A

20 μm

20 μm

2 mm

z

FIG 2B

z

x

y

FIG 2C

z

x,y

FIG 4A

FIG 4B

FIG 4C

$R_0 + \Delta R(z)$

$r_0 + \Delta r(z)$

core

cladding

$r_0$  $R_0$

## FIG 5

<u>52</u>

51

55

53

57

58

59

## FIG 6

Europäisches Patentamt
European Patent Office
Office européen des brevets

**EUROPEAN SEARCH REPORT**

Application Number

EP 09 00 4916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 790 735 A (OLESKEVICH TANYA [CA] ET AL) 4 August 1998 (1998-08-04) | 1-9, 11-13 | INV.<br>G02B6/14<br>G02B6/02 |
| A | * abstract; figures 1-7 * | 10,14 | |
| X | US 2003/210725 A1 (PRASSAS MICHEL [FR] ET AL) 13 November 2003 (2003-11-13) | 1,2 | |
| A | * abstract; figure 4 * | 3-14 | |
| X,P | US 2008/267229 A1 (KOJIMA SEIJI [JP] ET AL) 30 October 2008 (2008-10-30)<br>* abstract; figures 1-8 * | 1-14 | |

TECHNICAL FIELDS
SEARCHED (IPC)

G02B

The present search report has been drawn up for all claims

| Place of search | Date of completion of the search | Examiner |
|---|---|---|
| Munich | 20 July 2009 | Elflein, Wilhelm |

## ANNEX TO THE EUROPEAN SEARCH REPORT
## ON EUROPEAN PATENT APPLICATION NO.

EP 09 00 4916

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2009

| Patent document cited in search report | | Publication date | Patent family member(s) | | Publication date |
|---|---|---|---|---|---|
| US 5790735 | A | 04-08-1998 | WO | 9708791 A1 | 06-03-1997 |
| US 2003210725 | A1 | 13-11-2003 | NONE | | |
| US 2008267229 | A1 | 30-10-2008 | JP | 2008273769 A | 13-11-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5864644 A
- US 3666348 A
- US 3909110 A
- US 4176911 A
- US 3966446 A
- US 4038062 A
- US 6990277 B
- US 7043128 B
- US 6735985 B
- US 5418880 A
- US 5937134 A
- US 5966491 A